# FASCICULE DE BREVET EUROPEEN

(11) **EP 2 121 393 B1**
(45) Date de publication et mention de la délivrance du brevet: **21.03.2012**
(21) Numéro de dépôt: 07857620.4
(22) Date de dépôt: 14.12.2007
(51) Int. Cl.: B60R 25/02

(54) **DISPOSITIF ANTIVOL A PENE VERROUILLABLE POUR COLONNE DE DIRECTION**
DIEBSTAHLSICHERUNGSVORRICHTUNG MIT VERRIEGELUNGSBOLZEN FÜR LENKSÄULEN
ANTI-THEFT DEVICE WITH LOCKING BOLT FOR STEERING COLUMNS

(30) Priorité: 19.12.2006 FR 0655624
(43) Date de publication de la demande: 25.11.2009
(73) Titulaire: Valeo Sécurité Habitacle, 94046 Créteil Cedex (FR)
(72) Inventeur: GIACOMIN, Fabrice, 94042 Creteil (FR); CANARD, Louis, 94042 Creteil (FR)
(74) Mandataire: Croonenbroek, Thomas Jakob
(86) Numéro de dépôt international: PCT/EP2007/063986
(87) Numéro de publication internationale: WO 2008/074747

(56) Documents cités:
- EP-A1- 1 069 010
- DE-U1- 9 208 698
- FR-A- 2 330 570
- GB-A- 2 231 085

## Description

La présente invention concerne un antivol de direction qui met en oeuvre un pêne mobile à même d'être verrouillée en position en cas de rupture du corps de l'antivol.

L'invention trouve une application particulièrement avantageuse, mais non exclusive, dans le domaine automobile.

Il est traditionnel d'utiliser un antivol pour immobiliser en rotation une colonne de direction de véhicule automobile. Le blocage proprement dit est généralement réalisé à l'aide d'un pêne qui est monté mobile dans une première partie de l'antivol, et qui est commandé en déplacement par l'intermédiaire d'un verrou rotatif intégré quant à lui dans une seconde partie dudit antivol.

Parmi les antivols connus de l'état de la technique, nombre d'entre eux se distinguent par le fait qu'ils comprennent en outre des moyens de verrouillage capables de bloquer en position le pêne en cas de rupture du corps de l'antivol.

On pense notamment ici aux antivols fusibles dont le corps intègre une zone de rupture programmée lui permettant de se casser en deux lors d'un choc important, par exemple avec un membre inférieur du conducteur. Le but est bien évidemment d'empêcher la partie supportant le verrou, qui est par construction relativement rigide et saillante, de venir altérer sérieusement l'intégrité physique du conducteur. Quoi qu'il en soit, la présence de moyens de verrouillage permet dans une telle situation de maintenir le pêne dans une position inactive, et ainsi de ne pas bloquer inopportunément la direction afin de préserver la dirigeabilité du véhicule.

Mais c'est aussi le cas de certains antivols à sécurité renforcée, pour lesquels la capacité de blocage du pêne s'avère particulièrement avantageuse en cas de tentative d'effraction. Une personne mal intentionnée peut en effet décider de casser le corps de l'antivol pour accéder au pêne, afin de le désactiver en vue de libérer la rotation de la colonne de clieection. La présence de moyens de verrouillage permet ici de maintenir le pêne dans sa position active, de sorte que la colonne de direction demeure malgré tout bloquée en rotation.

En général, les moyens de verrouillage se composent de trois organes principaux. On trouve tout d'abord un élément de blocage qui est monté mobile en déplacement entre une position passive dans laquelle il est disposé à distance du pêne, et une position active dans laquelle il bloque ce dernier en déplacement. On a ensuite un moyen de rappel élastique qui entrain en permanence l'élément de blocage en positon active. Enfin, on dispose d'un élément déclencheur qui est quant à lui monté amovible depuis une position de maintien dans laquelle il maintient l'élément de blocage en position passive. Les documents GB 2 231 086 A et DE 92 08 698 U1 motrent des antivols dans lesquels élément déclencheur est libéré en cas de rupture du bollier d'anlivol.

Habituellement, l'élément déclencheur est maintenu en position de maintien par une pièce constitutive de La seconde partie de l'antivol. Il s'agit en l'occurrence d'un interrupteur qui est commandé par la mise en rotation du rotor du verrou, et qui est chargé d'activer le démarrage ainsi que différentes fonctions électriques du véhicule automobile.

Dans la pratique, l'élément déclencheur est sollicité en déplacement de manière permanente par un ressort de rappel, tout en prenant appui contre l'interrupteur qui est positionné en opposition par rapport au déplacement en question, et qui le bloque donc en position de maintien en conditions normales d'utilisation. L'ensemble est cependant agencé de façon à ce que la séparation des deux parties de l'antivol libère la mobilité de l'élément déclencheur qui est alors entraîné en déplacement hors de la position de maintien, provoquant ainsi la mise en oeuvre du reste des moyens de verrouillage.

Ce type de dispositif antivol présente toutefois l'inconvénient de présenter un niveau de protection encore insuffisant. Les moyens de verrouillage du pêne ne peuvent en effet être mis en oeuvre qu'en cas de bris du corps de l'antivol au niveau de la zone de rupture programmée. Cela signifie en d'autres termes qu'ils demeurent inopérants lors d'une attaque localisée sur le rotor du verrou. Or après arrachement de ce dernier par exemple, il apparaît tout à fait envisageable d'accéder au pêne puis de le désactiver en l'écartant de la colonne de direction.

Aussi, le problème technique à résoudre par l'objet de la présente invention, est de proposer un dispositif antivol pour une colonne de direction notamment de véhicule automobile, comportant:
- un pêne monté mobile dans une première partie de l'antivol et à même d'immobiliser en rotation la colonne de direction,
- un verrou comprenant un rotor monté rotatif dans une seconde partie de l'antivol et commandant le déplacement du pêne,
- ainsi que des moyens de verrouillage à même d'immobiliser le pêne en cas de séparation des deux parties de l'antivol, la mise en oeuvre des moyens de verrouillage étant commandée par le déplacement d'un élément déclencheur qui est monté amovible depuis une position de maintien dans laquelle il condamne toute activation desdits moyens de verrouillage,
dispositif antivol qui permettrait d'éviter les problèmes de l'état de la technique en offrant notamment un niveau de d'inviolabilité sensiblement amélioré.

La solution au problème technique posé consiste, selon la présente invention, en ce que l'élément déclencheur est maintenu en position de maintien par le rotor du verrou.

Autrement dit, l'immobilisation du pêne est assurée par un élément de blocage qui est maintenu en position passive par un élément déclencheur lui même bloqué en position de maintien par le rotor du verrou.

L'invention telle qu'ainsi définie présente l'avantage de garantir la mise en oeuvre des moyens de verrouillage aussi bien en cas de rupture du corps de l'antivol, qu'en cas de retrait du rotor du verrou rotatif.

Par rapport aux antivols de direction de l'art antérieur, l'élément déclencheur est toujours bloqué en position de maintien par un élément constitutif de la seconde partie de l'antivol, mais il s'agit dans le cas présent du rotor du verrou. Ce choix s'avère particulièrement judicieux étant donné le rôle central de cette pièce qui commande à la fois le déplacement du pêne, l'activation des fonctions électriques du véhicule et le démarrage du moteur, mais également en raison du fait que le rotor constitue par ailleurs un point d'entrée direct à l'intérieur de l'antivol.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
Les figures 1 à 4 sont des écorchés illustrant un dispositif antivol qui est conforme à un mode de réalisation actuellement préféré de l'invention.
La figure 1 est une vue en perspective latérale de l'ensemble de ce premier dispositif antivol.
La figure 2 fait plus particulièrement apparaître les moyens de verrouillage équipant le premier dispositif antivol.
La figure 3 représente le rotor et l'élément déclencheur du premier dispositif antivol, en début de phase de couplage.
La figure 4 montre la liaison entre le rotor et l'élément déclencheur du premier dispositif antivol, en fin de phase de couplage.
Les figures 5 à 9 sont des écorchés qui illustrent quant à eux un dispositif antivol qui est conforme à une variante particulièrement avantageuse du mode de réalisation préféré.

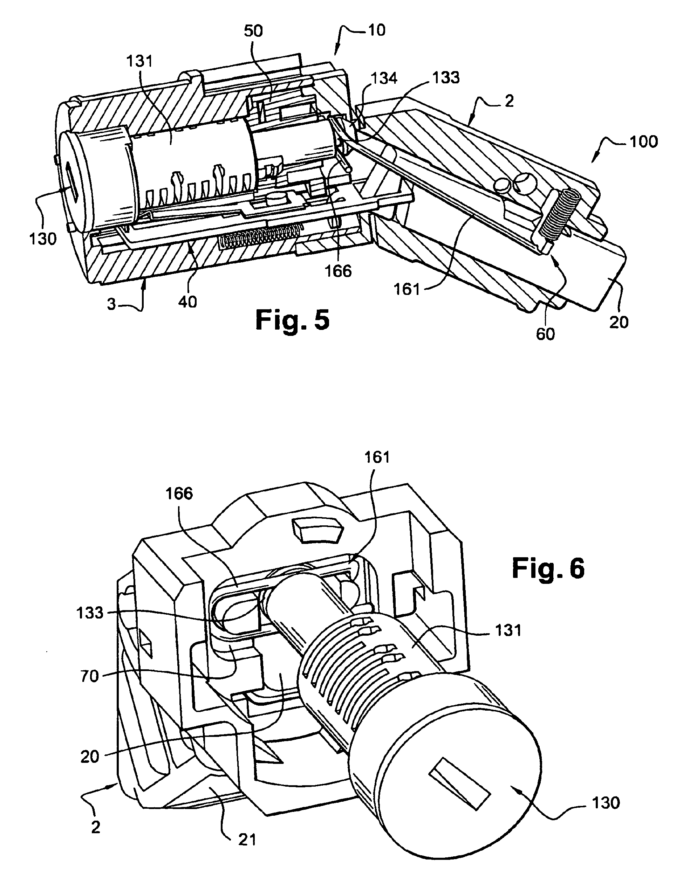

La figure 5 est une vue en perspective latérale de l'ensemble de ce second dispositif antivol.
La figure 6 représente en perspective avant la liaison entre le rotor et l'élément déclencheur du second dispositif antivol.

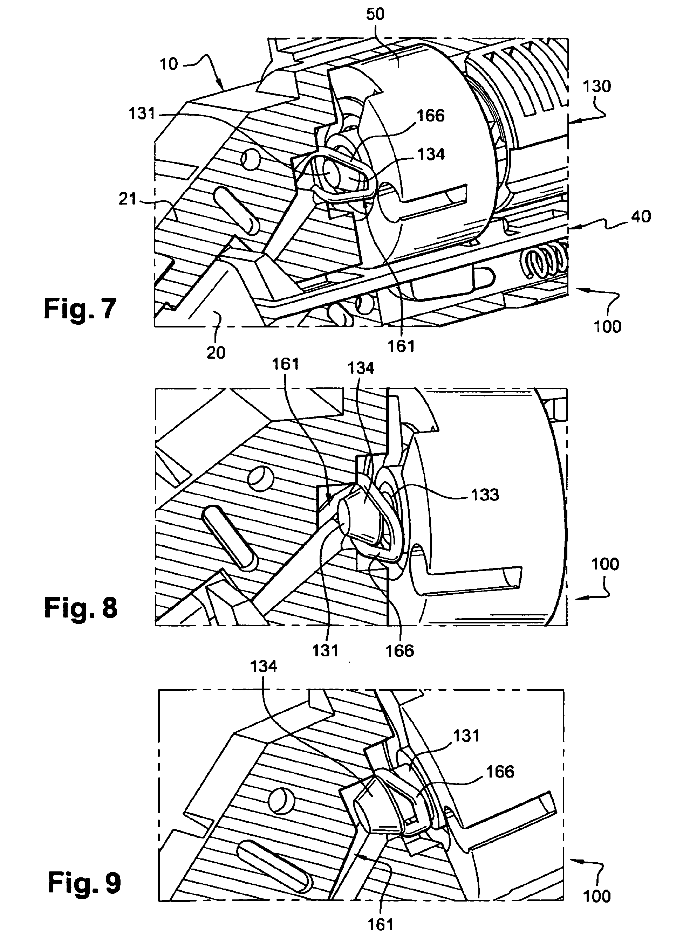

La figure 7 montre l'élément déclencheur et le rotor du second dispositif antivol, en début de phase de couplage.
La figure 8 constitue une vue similaire à la figure 7, mais en cours de phase de couplage.
La figure 9 est une vue analogue aux figures 7 et 8, mais en fin de phase de couplage.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

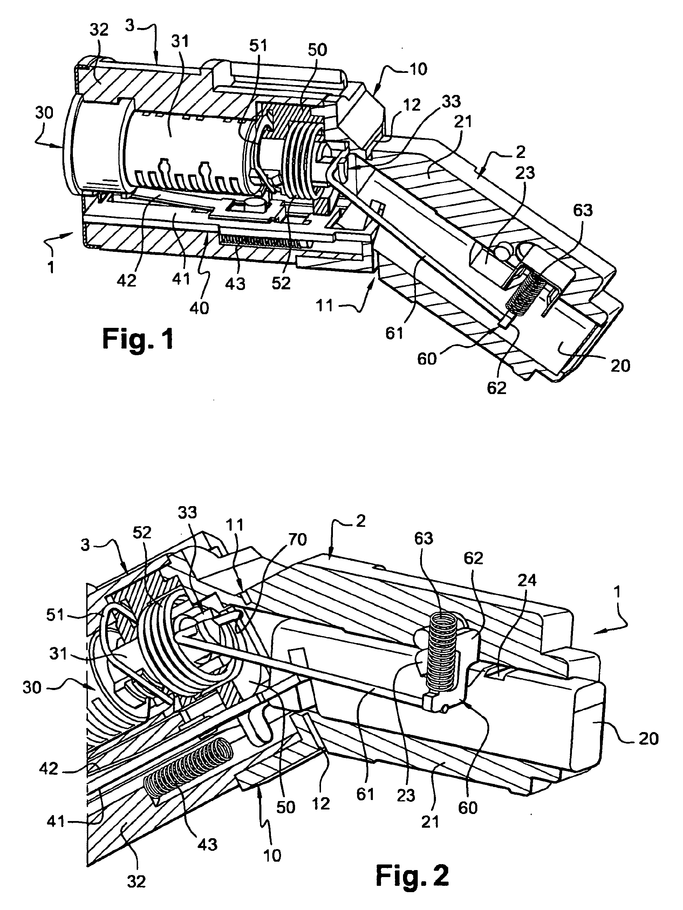

Les figures 1 à 4 illustrent un dispositif antivol 1 qui est destiné à être monté à l'intérieur d'un véhicule automobile, afin de sécuriser l'utilisation de la colonne de direction.

Il s'agit plus précisément d'un dispositif antivol 1 de type fusible, puisqu'il dispose d'un corps d'antivol 10 intégrant une zone de rupture programmée 11. Cette dernière est matérialisée par une entaille 12 qui fait tout le tour du corps 10, et qui divise l'antivol 1 en deux parties 2, 3 renfermant respectivement un pêne de blocage 20 et un verrou rotatif 30.

Conformément aux figures 1 et 2, le pêne 20 est monté coulissant dans la première partie 2 de l'antivol 1, via un guide pêne 21 faisant partie intégrante du corps d'antivol 10. Cette mobilité s'exerce entre une position de stockage dans laquelle le pêne 20 est complètement rentré à l'intérieur du guide pêne 21 (figure 1), et une position de blocage dans laquelle il fait saillie à l'extrémité dudit guide pêne 21 de manière à pouvoir coopérer classiquement par emboîtement avec un élément mobile de ladite colonne de direction (figure 2).

Le verrou 30 comprend pour sa part un rotor 31 qui est monté rotatif dans la seconde partie 3 de l'antivol 1, par l'intermédiaire d'un stator 32 faisant partie intégrante du corps d'antivol 10. Cette mobilité permet de remplir plusieurs fonctions.

Le verrou 30 est avant tout chargé de commander des moyens de déplacement 40 du pêne 20 entre sa position de stockage et sa position de blocage. Ces derniers se présentent classiquement sous la forme essentiellement d'une tirette 41 associée à une lame ressort 42 et à un premier ressort de rappel 43. L'ensemble étant parfaitement connu tant au point de vue structurel que fonctionnel, il ne sera pas décrit davantage ici.

Mais le verrou 30 est également destiné à commander l'activation des fonctions électriques du véhicule, ainsi que le démarrage du moteur. C'est pourquoi il est couplé à un interrupteur par l'intermédiaire d'une came 50 qui est solidarisée à l'extrémité arrière du rotor 31 via un jonc de clippage 51. On note par ailleurs la présence d'un second ressort de rappel 52 qui prend place à l'intérieur de la came 50, et qui permet de revenir de la position démarreur à la position marche du verrou 30.

On remarque enfin sur ces deux premières représentations que le dispositif antivol 1 dispose en outre de moyens de verrouillage 60 qui sont en mesure d'immobiliser le pêne 20 en cas de séparation des deux parties 2, 3 du dispositif antivol 1. L'ensemble est agencé de manière à ce que la mise en oeuvre des moyens de verrouillage 60 soit commandée par le déplacement d'un élément déclencheur 61 qui est monté amovible depuis une position de maintien dans laquelle il condamne toute activation desdits moyens de verrouillage 60.

Conformément à l'objet de la présente invention, l'élément déclencheur 61 est maintenu en position de maintien par le rotor 31 du verrou 30.

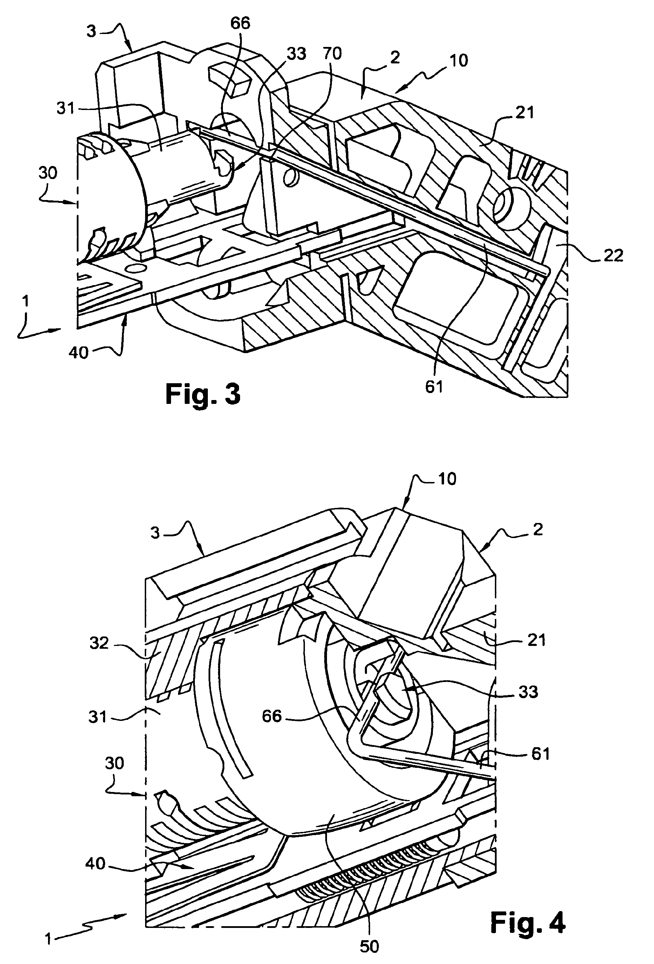

Ainsi qu'on peut le voir plus clairement à la figure 2, les moyens de verrouillage 60 sont tout d'abord dotés d'un élément de blocage 62 monté mobile en déplacement dans un logement de guidage 22 qui est ménagé dans le guide pêne 21, et qui est visible à la figure 3. Cette mobilité s'exerce entre une position passive dans laquelle l'élément de blocage 62 est disposé à distance du pêne 20, et une position active dans laquelle il est emboîté dans une encoche 23, 24 creusée le long dudit pêne 20 de façon à bloquer tout déplacement de ce dernier.

On observe également que les moyens de verrouillage 60 sont en outre pourvus d'un moyen de rappel élastique 63 qui entraîne en permanence l'élément de blocage 62 en position active, et qui se présente dans cet exemple de réalisation sous la forme d'un ressort de compression qui pousse ledit élément de blocage 62 vers une des encoches 23, 24 du pêne 20.

L'ensemble est par ailleurs agencé de manière à ce qu'en position de maintien (figures 1 et 2), l'élément déclencheur 61 maintienne l'élément de blocage 62 en position passive, ce qui a pour conséquence de laisser libre la mobilité du pêne 20.

Dans ce mode de réalisation actuellement préféré de l'invention, l'élément déclencheur 61 des moyens de verrouillage 60 est solidaire du rotor 31 du verrou 30.

Cette caractéristique permet de garantir le déplacement de l'élément déclencheur 61, et donc mise en oeuvre des moyens de verrouillage 60, en cas de rupture du corps d'antivol 10 ou d'arrachage du rotor 31. Il n'est ainsi pas nécessaire de prévoir des moyens d'entraînement spécifiques, ce qui a pour avantage de simplifier significativement la structure des moyens de verrouillage 60, et donc d'amoindrir le prix de revient du dispositif antivol 1.

Dans ce premier exemple de réalisation, l'élément déclencheur 61 est en fait emboîté dans la partie arrière du rotor 31, suivant une direction sensiblement perpendiculaire à la direction de déplacement dudit élément déclencheur 61, lorsque ce dernier est éloigné de la position de maintien suite à une rupture du corps d'antivol 10 ou un arrachement du rotor 31.

Ainsi qu'on peut le voir notamment à la figure 3, l'élément déclencheur 61 se présente sous la forme d'une pièce filaire dont une extrémité coudée 66 est en mesure de s'insérer axialement dans une forme d'ancrage 33 ménagée à l'arrière du rotor 31, puis à s'emboîter dans ladite forme d'ancrage 33 suivant une direction sensiblement perpendiculaire en à la direction d'insertion.

Un tel montage par emboîtement de type baïonnette permet de coupler le rotor 31 à l'élément déclencheur 61 par simple insertion puis rotation axiale dudit rotor 31 dans le corps d'antivol 10.

La figure 3 montre par ailleurs que le dispositif antivol 1 comporte en outre deux surfaces d'appui 70 qui sont à même de bloquer l'élément déclencheur 61 en rapprochement vers la position de maintien.

Cette caractéristique permet de maintenir axialement l'élément déclencheur 61 lors du couplage avec le rotor 31, car il a naturellement tendance à s'enfoncer dans le guide pêne 21 sous l'effet de la pression exercée par ledit rotor 31 au moment de la réalisation de l'emboîtement.

De manière particulièrement avantageuse, les deux surfaces d'appui 70 sont ménagées au fond d'évidements qui sont à même de recevoir les portions respectives de l'élément déclencheur 61 qui s'étendent directement en vis-à-vis.

Cette spécificité autorise quant à elle un certain maintien transversal de l'élément déclencheur 61 au moment de son couplage avec le rotor 31.

De préférence, l'élément déclencheur 61 est sensiblement rigide.

Cette caractéristique permet en effet de garantir un positionnement relatif optimal entre l'élément déclencheur 61 élément le corps d'antivol 10 d'une part, et entre l'élément déclencheur 61 et le rotor 31 d'autre part. Le but ultime est de faciliter le couplage entre ces deux dernières pièces.

Les figures 5 à 9 représentent quant à elles un dispositif antivol 100 qui est conforme à une variante particulièrement avantageuse du mode de réalisation préféré précédemment décrit. Celle-ci se distingue essentiellement par le fait que les moyens de verrouillage 60 de l'antivol 100 sont commandés ici par un élément déclencheur 161 qui est solidarisé par clippage au rotor 131 du verrou 130.

De manière particulièrement avantageuse, l'élément déclencheur 161 est d'ailleurs élastiquement déformable.

Il est à noter que cette caractéristique peut provenir indifféremment de la nature du matériau constitutif et/ou de la forme et/ou des dimensions de l'élément déclencheur 161.

Ainsi qu'on peut le voir notamment aux figures 5 et 6, l'élément déclencheur 161 est concrètement constitué par une pièce filaire dont une extrémité présente une forme de boucle 166 qui est en mesure de se clipper dans une gorge 133 ménagée transversalement sur la partie arrière du rotor 131.

Conformément à une autre caractéristique avantageuse de cette variante de réalisation, la partie arrière du rotor 131, sur laquelle est destiné à venir se clipper l'élément déclencheur 161, comporte un chanfrein 134 favorisant la déformation élastique de l'extrémité 166.

Les figures 7 à 9 illustrent plus particulièrement les principales étapes du processus de montage permettant de coupler ensemble l'élément déclencheur 161 et le rotor 131 du dispositif antivol 100.

Conformément à la figure 7, le clippage nécessite que l'élément déclencheur 161 soit préalablement implanté à l'intérieur du guide pêne 21. Le rotor 131 peut alors être inséré axialement dans le corps d'antivol 10.

Ainsi qu'on peut le voir à la figure 8, lorsque l'extrémité arrière du rotor 131 va se rapprocher de l'élément déclencheur 161, le chanfrein 134 va progressivement déformer élastiquement la boucle 166.

Une fois que l'élément déclencheur 161 va atteindre la gorge 133, la boucle 166 va pouvoir reprendre sa forme initiale comme à la figure 9, et ainsi réaliser le clippage.

Le fait que l'élément déclencheur 61, 161 soit solidaire du rotor 31, 131 du verrou 30, 130 n'est pas une obligation en soit, même si cela présente de nombreux avantages. C'est ainsi que conformément à un second mode de réalisation de l'invention non représenté, l'élément déclencheur pourrait de manière permanente être sollicité en rapprochement vers le rotor du verrou par des moyens de rappel élastique, et être par ailleurs bloqué en position de maintien par ledit rotor.

Bien entendu, l'invention concerne également toute colonne de direction, notamment de véhicule automobile, doté d'un dispositif antivol 1, 100 tel que précédemment décrit.

En outre, l'invention est plus largement relative à tout véhicule automobile pourvu d'un tel dispositif antivol 1, 100.

## Revendications

1. Dispositif antivol (1, 100) pour une colonne de direction notamment de véhicule automobile, comportant:
- un pêne (20) monté mobile dans une première partie (2) de l'antivol (1, 100) et à même d'immobiliser en rotation la colonne de direction,
- un verrou (30, 130) comprenant un rotor (31, 131) monté rotatif dans une seconde partie (3) de l'antivol (1, 100) et commandant le déplacement du pêne (20),
- ainsi que des moyens de verrouillage (60) à même d'immobiliser le pêne (20) en cas de séparation des deux parties (2, 3) de l'antivol (1), la mise en oeuvre des moyens de verrouillage (60) étant commandée par le déplacement d'un élément déclencheur (61, 161) qui est monté amovible depuis une position de maintien dans laquelle il condamne toute activation desdits moyens de verrouillage (60), élément déclencheur (61, 161) est maintenue en position de maintien par le rotor (31, 131) du verrou (30, 130) **caractérisé en ce que** les moyens de verrouillage (60) comportent un élément de blocage (62) monté mobile en déplacement entre une position passive dans laquelle il est disposé à distance du pêne (20), et une position active dans laquelle ledit élément de blocage (20) est emboîté dans une encoche (23, 24) creusée le long dudit pêne (20) de sorte à bloquer en déplacement ledit pêne (20), et **en ce que** l'élément déclencheur (61, 161) maintient l'élément de blocage (62) en position passive.

2. Dispositif antivol (1, 100) selon la revendication 1, **caractérisé en ce que** les moyens de verrouillage (60) comportent un moyen de rappel élastique (63) entraînant en permanence l'élément de blocage (62) en position active.

3. Dispositif antivol selon l'une des revendications 1 ou 2, **caractérisé en ce que** l'élément déclencheur est de manière permanente sollicité en rapprochement vers le rotor du verrou par des moyens de rappel élastique, et **en ce qu'**il est par ailleurs bloqué en position de maintien par ledit rotor.

4. Dispositif antivol (1, 100) selon l'une des revendications 1 ou 2, **caractérisé en ce que** l'élément déclencheur (61, 161) est solidaire du rotor (31, 131) du verrou (30, 130).

5. Dispositif antivol (100) selon la revendication 4, **caractérisé en ce que** l'élément déclencheur (161) est solidarisé au rotor (131) du verrou (130) par clippage.

6. Dispositif antivol (100) selon la revendication 5, **caractérisé en ce que** l'élément déclencheur (161) est élastiquement déformable.

7. Dispositif antivol (100) selon l'une des revendications 5 ou 6, **caractérisé en ce que** l'élément déclencheur (161) est constitué par une pièce filaire dont une extrémité présente une forme de boucle (166) qui est apte à se clipper dans une gorge (133) ménagée à l'arrière du rotor (131).

8. Dispositif antivol (100) selon l'une quelconque des revendications 5 à 7, **caractérisé en ce que** la partie du rotor (131), sur laquelle est destiné à être clippé l'élément déclencheur (161), comporte un chanfrein (134) apte à favoriser la déformation élastique de l'extrémité (166).

9. Dispositif antivol (1) selon la revendication 4, **caractérisé en ce que** l'élément déclencheur (61) est solidarisé au rotor (31) du verrou (30), par emboîtement suivant une direction sensiblement perpendiculaire à la direction de déplacement dudit élément déclencheur (61).

10. Dispositif antivol (1) selon la revendication 9, **caractérisé en ce que** l'élément déclencheur (61) est constitué par une pièce filaire dont une extrémité coudée (66) est apte à s'insérer axialement dans une forme d'ancrage (33) ménagée à l'arrière du rotor (31), puis à s'emboîter dans ladite forme d'ancrage (33) suivant une direction sensiblement perpendiculaire à la direction d'insertion.

11. Dispositif antivol (1) selon l'une des revendications 9 ou 10, **caractérisé en ce que** l'élément déclencheur (61) est sensiblement rigide.

12. Dispositif antivol (1, 100) selon l'une quelconque des revendications 1 à 11, **caractérisé en ce qu'**il comporte en outre au moins une surface d'appui (70) qui est apte à bloquer l'élément déclencheur (61, 161) en rapprochement vers la position de maintien.

13. Dispositif antivol (1, 100) selon la revendication 12, **caractérisé en ce qu'**au moins une surface d'appui (70) est ménagée au fond d'un évidement apte à recevoir la portion de l'élément déclencheur (61, 161) qui s'étend directement en vis-à-vis.

14. Colonne de direction notamment de véhicule automobile, **caractérisée en ce qu'**elle comporte un dispositif antivol (1) selon l'une quelconque des revendications précédentes.

15. Véhicule automobile, **caractérisé en ce qu'**il comporte un dispositif antivol (1) selon l'une quelconque des revendications 1 à 13.

## Claims

1. Antitheft device (1, 100) for a steering column particularly of a motor vehicle comprising:
- a bolt (20) mounted so as to move in a first portion (2) of the antitheft device (1, 100) and capable of preventing the steering column from rotating,
- a latch (30, 130) comprising a rotor (31, 131) mounted so as to rotate in a second portion (3) of the antitheft device (1, 100) and controlling the movement of the bolt (20),
- and latching means (60) capable of immobilizing the bolt (20) in the event of separation of the two portions (2, 3) of the antitheft device (1), the application of the latching means (60) being controlled by the movement of a triggering element (61, 161) which is mounted so as to be removable from a holding position in which it blocks any activation of said latching means (60),
the triggering element (61, 161) is held in the holding position by the rotor (31, 131) of the latch (30, 130), **characterized in that** the latching means (60) comprise a locking element (62) mounted so as to move between a passive position in which it is placed at a distance from the bolt (20), and an active position in which said locking element (62) is interlocked in a notch (23, 24) cut out along said bolt (20) so as to prevent the movement of said bolt (20), and **in that** the triggering element (61, 161) holds the locking element (62) in the passive position.

2. Antitheft device (1, 100) according to Claim 1, **characterized in that** the latching means (60) comprise an elastic return means (63) constantly driving the locking element (62) in the active position.

3. Antitheft device according to either of Claims 1 and 2, **characterized in that** the triggering element is permanently pushed closer to the rotor of the latch by elastic return means, and **in that** it is furthermore locked in the holding position by said rotor.

4. Antitheft device (1, 100) according to either of Claims 1 and 2, **characterized in that** the triggering element (61, 161) is secured to the rotor (31, 131) of the latch (30, 130).

5. Antitheft device (100) according to Claim 4, **characterized in that** the triggering element (161) is secured to the rotor (131) of the latch (130) by clipping.

6. Antitheft device (100) according to Claim 5, **characterized in that** the triggering element (161) is elastically deformable.

7. Antitheft device (100) according to either of Claims 5 and 6, **characterized in that** the triggering element (161) consists of a wire-like part one end of which has a loop shape (166) which is capable of being clipped into a groove (133) made at the rear of the rotor (131).

8. Antitheft device (100) according to any one of Claims 5 to 7, **characterized in that** the rotor portion (131) onto which the triggering element (161) is designed to be clipped, comprises a bevel (134) capable of promoting the elastic deformation of the end (166).

9. Antitheft device (1) according to Claim 4, **characterized in that** the triggering element (61) is secured to the rotor (31) of the latch (30) by interlocking in a direction substantially perpendicular to the direction of movement of said triggering element (61).

10. Antitheft device (1) according to Claim 9, **characterized in that** the triggering element (61) consists of a wire-like part a bent end (66) of which is capable of being inserted axially into a form of anchorage (33) made at the rear of the rotor (31), and then being interlocked into said form of anchorage (33) in a direction substantially perpendicular to the direction of insertion.

11. Antitheft device (1) according to either of Claims 9 and 10, **characterized in that** the triggering element (61) is substantially rigid.

12. Antitheft device (1, 100) according to any one of Claims 1 to 11, **characterized in that** it also comprises at least one bearing surface (70) which is capable of locking the triggering element (61, 161) coming closer to the holding position.

13. Antitheft device (1, 100) according to Claim 12, **characterized in that** at least one bearing surface (70) is made at the bottom of a recess capable of receiving the portion of the triggering element (61, 161) that extends directly opposite.

14. Steering column, particularly of a motor vehicle, **characterized in that** it comprises an antitheft device (1) according to any one of the preceding claims.

15. Motor vehicle, **characterized in that** it comprises an antitheft device (1) according to any one of Claims 1 to 13.

## Patentansprüche

1. Diebstahlsicherungsvorrichtung (1, 100) für eine Lenksäule insbesondere für Kraftfahrzeug, mit:
- einer Falle (20), die in einem ersten Teil (2) der Diebstahlsicherung (1, 100) beweglich montiert ist und die Lenksäule rotatorisch unbeweglich machen kann,
- einem Riegel (30, 130), der einen Rotor (31, 131) aufweist, der in einem zweiten Teil (3) der Diebstahlsicherung (1, 100) drehbar montiert ist und die Verlagerung der Falle (20) steuert,
- sowie Verriegelungsmittel (60), die die Falle (20) im Fall der Trennung der zwei Teile (2, 3) der Diebstahlsicherung (1) unbeweglich machen können, wobei die Betätigung der Verriegelungsmittel (60) durch die Verlagerung eines Auslöseelements (61, 161) gesteuert wird, das von einer Halteposition abnehmbar montiert ist, in der es jegliche Aktivierung der Verriegelungsmittel (60) verhindert, wobei das Auslöseelement (61, 161) in der Halteposition durch den Rotor (31, 131) des Riegels (30, 130) gehalten wird, **dadurch gekennzeichnet, dass** die Verriegelungsmittel (60) ein Blockierelement (62) umfassen, das zwischen einer passiven Position, in der es in einem Abstand von der Falle (20) angeordnet ist, und einer aktiven Position, in der das Blockierelement (62) in einer Hohlnut (23, 24) längs der Falle (20) aufgenommen ist, um die Verlagerung der Falle (20) zu blockieren, verlagerbar beweglich montiert ist, und dass das Auslöseelement (61, 161) das Blockierelement (62) in der passiven Position hält.

2. Diebstahlsicherungsvorrichtung (1, 100) nach Anspruch 1, **dadurch gekennzeichnet, dass** die Verriegelungsmittel (60) ein elastisches Rückstellmittel (63) umfassen, das das Blockierelement (62) ständig in die aktive Position vorbelastet.

3. Diebstahlsicherungsvorrichtung nach einem der Ansprüche 1 oder 2, **dadurch gekennzeichnet, dass** das Auslöseelement durch elastische Rückstellmittel dauerhaft vorbelastet ist, um sich dem Rotor des Riegels anzunähern, und dass es außerdem in der Halteposition durch den Rotor blockiert wird.

4. Diebstahlsicherungsvorrichtung (1, 100) nach einem der Ansprüche 1 oder 2, **dadurch gekennzeichnet, dass** das Auslöseelement (61, 161) mit dem Rotor (31, 131) des Riegels (30, 130) fest verbunden ist.

5. Diebstahlsicherungsvorrichtung (100) nach Anspruch 4, **dadurch gekennzeichnet, dass** das Auslöseelement (161) mit dem Rotor (131) des Riegels (130) durch Einrasten fest verbunden ist.

6. Diebstahlsicherungsvorrichtung (100) nach Anspruch 5, **dadurch gekennzeichnet, dass** das Auslöseelement (161) elastisch verformbar ist.

7. Diebstahlsicherungsvorrichtung (100) nach einem der Ansprüche 5 oder 6, **dadurch gekennzeichnet, dass** das Auslöseelement (161) durch ein Drahtteil gebildet ist, wovon ein Ende eine Schleifenform (166) aufweist, die in einer Kehle, die hinter dem Rotor (131) ausgebildet ist, einrasten kann.

8. Diebstahlsicherungsvorrichtung (100) nach einem der Ansprüche 5 bis 7, **dadurch gekennzeichnet, dass** der Teil des Rotors (131), an dem das Auslöseelement (161) einrasten soll, eine Fase (134) aufweist, die die elastische Verformung des Endes (166) begünstigt.

9. Diebstahlsicherungsvorrichtung (1) nach Anspruch 4, **dadurch gekennzeichnet, dass** das Auslöseelement (61) mit dem Rotor (31) des Riegels (30) durch Einsetzen in einer zur Verlagerungsrichtung des Auslöseelements (61) im Wesentlichen senkrechten Richtung befestigt ist.

10. Diebstahlsicherungsvorrichtung (1) nach Anspruch 9, **dadurch gekennzeichnet, dass** das Auslöseelement (61) aus einem Drahtteil gebildet ist, wovon ein gebogenes Ende (66) axial in eine Verankerungsform (33) eingeführt werden kann, die hinter dem Rotor (31) ausgebildet ist, und dann in die Verankerungsform (33) längs einer zu der Einführrichtung im Wesentlichen senkrechten Richtung eingesetzt werden kann.

11. Diebstahlsicherungsvorrichtung (1) nach einem der Ansprüche 9 oder 10, **dadurch gekennzeichnet, dass** das Auslöseelement (61) im Wesentlichen starr ist.

12. Diebstahlsicherungsvorrichtung (1, 100) nach einem der Ansprüche 1 bis 11, **dadurch gekennzeichnet, dass** sie außerdem wenigstens eine Abstützoberfläche (70) aufweist, die das Auslöseelement (61, 161) bei seiner Annäherung an die Halteposition blockieren kann.

13. Diebstahlsicherungsvorrichtung (1, 100) nach Anspruch 12, **dadurch gekennzeichnet, dass** wenigstens eine Abstützoberfläche (70) am Boden einer Aussparung ausgebildet ist, die den Abschnitt des Auslöseelements (61, 161) aufnehmen kann, der sich direkt gegenüber erstreckt.

14. Lenksäule, insbesondere für Kraftfahrzeug, **dadurch gekennzeichnet, dass** sie eine Diebstahlsicherungsvorrichtung (1) nach einem der vorhergehenden Ansprüche umfasst.

15. Kraftfahrzeug, **dadurch gekennzeichnet, dass** es eine Diebstahlsicherungsvorrichtung (1) nach einem der Ansprüche 1 bis 13 umfasst.
